(19) **Europäisches Patentamt**
**European Patent Office**
**Office européen des brevets**

(11) **EP 4 355 529 B1**

(12) **EUROPEAN PATENT SPECIFICATION**

(45) Date of publication and mention
of the grant of the patent:
**12.02.2025 Bulletin 2025/07**

(21) Application number: **22754171.1**

(22) Date of filing: **25.07.2022**

(51) International Patent Classification (IPC):
***B24B 49/12*** *(2006.01)* ***B24B 49/16*** *(2006.01)*

(52) Cooperative Patent Classification (CPC):
**B24B 49/12; B24B 49/16**

(86) International application number:
**PCT/IB2022/056851**

(87) International publication number:
**WO 2023/007356 (02.02.2023 Gazette 2023/05)**

(54) **ROBOTIC ABRASIVE SYSTEMS AND METHODS**

ROBOTISCHE SCHLEIFSYSTEME UND VERFAHREN

SYSTÈMES ET PROCÉDÉS ABRASIFS ROBOTISÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.07.2021 US 202163203786 P**

(43) Date of publication of application:
**24.04.2024 Bulletin 2024/17**

(73) Proprietor: **3M Innovative Properties Company
Saint Paul, Minnesota 55133-3427 (US)**

(72) Inventors:
• **NAKAMURA, Yoko
Tokyo 141-8684 (JP)**

• **KAWAI, Ryogo
Tokyo 141-8684 (JP)**
• **ANDO, Yoko
Tokyo 141-8684 (JP)**
• **YAMASAKI, Taiji
Tokyo 141-8684 (JP)**

(74) Representative: **Bergen, Katja
3M Deutschland GmbH
OIPC
Carl-Schurz-Strasse 1
41453 Neuss (DE)**

(56) References cited:
**WO-A1-2021/105865 US-A1- 2020 156 210**

**Description**

## BACKGROUND

Many industries need to prepare surfaces of parts or replacement parts for various purposes. Typical surface preparation processes include, for example, physically abrading surfaces, or "scuffing". Typical operations often include, for example, sanding and polishing. Surface preparation and repair of defects on surfaces can utilize different tools materials and fluids.

Such a system is e.g. known from document WO 2021/105865 A1, which discloses an abrading operation monitoring system comprising a particle tracking system that receives, from a particle position retriever, a position of an abrasive particle on an abrasive article surface and an abrasive operation parameter retriever that retrieves, using a communication component, a current set of operation parameters for an abrading machine.

## SUMMARY

The general problem faced in metal abrading operations is the surface quality when an abrading operation is finished. It is important for many end products to be substantially free of scratches.

The invention according to claim 1 provides an improved abrading operation monitoring system that includes a particle tracking system that receives, from a particle position retriever, a position of an abrasive particle on an abrasive article surface. The system also includes an abrasive operation parameter retriever that retrieves, using a communication component, a current set of operation parameters for an abrading machine. The system also includes an abrasive volume calculator that calculates an abrading volume for a worksurface contacted by the abrasive article surface based on a path of the tracked abrasive particle and the current set of operation parameters. The system also includes an abrasive parameters adjuster that provides a new set of operation parameters for the abrading system based on the calculated abrading volume. The abrading system implements the new set of operation parameters.

Claim 8 provides a method of adjusting operation parameters for a robotic abrading system, whereas further embodiments of the invention are subject to the appended dependent claims.

## BRIEF DESCRIPTION OF THE DRAWINGS

The disclosure may be more completely understood in consideration of the following detailed description of various embodiments of the disclosure in connection with the accompanying figures, in which:

FIG. 1 is a schematic of a robotic abrading system in which embodiments of the present invention are useful.
FIG. 2 is a schematic of an abrasive article with a plurality of shaped abrasive particles.
FIGS. 3A and 3B illustrate abrasive particle arrangements for an abrasive article.
FIG. 4 illustrates a schematic of an abrasive article during an abrasive operation.
FIG. 5A illustrates a method of selecting parameters for a robotic abrading system in accordance with embodiments herein.
FIG. 5B illustrates a robotic abrading system in accordance with embodiments herein.
FIG. 6 illustrates a parameter set generator in accordance with embodiments herein.
FIGS. 7-9 illustrates an example computing systems that may be used in accordance with embodiments herein.
FIGS. 10-14E illustrate abrasive systems and parameter generation results as discussed in the Examples.

In the drawings, like reference numerals indicate like elements. While the above-identified drawings, which may not be drawn to scale, set forth various embodiments of the present disclosure, other embodiments are also contemplated, as noted in the Detailed Description.

## DETAILED DESCRIPTION

The present disclosure provides an automated system and methods of using a robotic abrading system on an end-of-arm system with mounted tools for processing (e.g., scuffing, sanding, polishing, etc.) an object surface or interior. The processing tools along with the fluid removal tool can be mounted on an end effector at the end of a motive robot arm, such that they capable of moving between various areas on or within a workpiece. A process tool may include a functional component configured to contact and prepare the object surface; one or more sensors configured to detect working state information of the end-effector tool, a dispenser for fluid while the functional component contacts and prepares the object surface; and / or a control circuit to receive signals from the sensors and process the signals to generate state information of the tool.

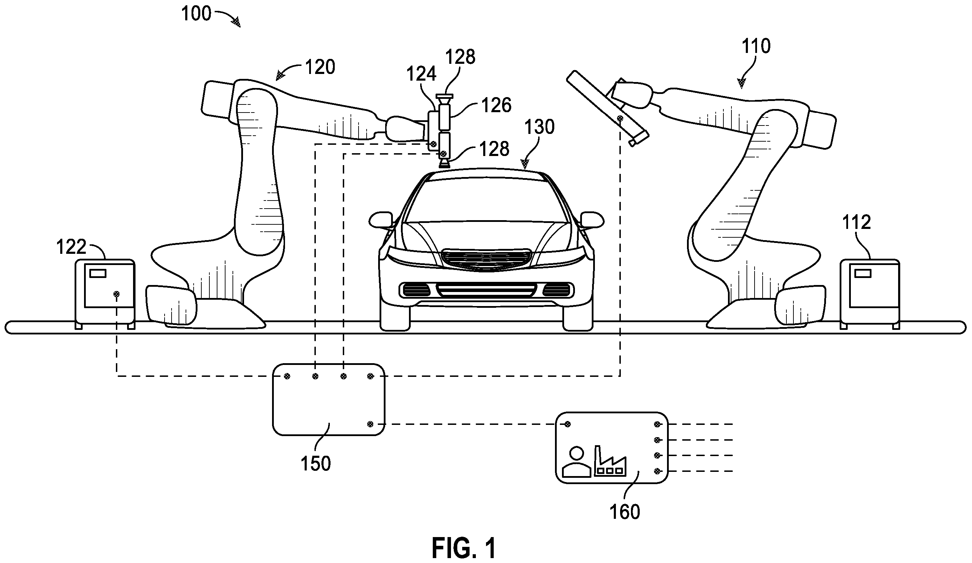

FIG. 1 is a schematic of a robotic abrasive system in which embodiments of the present invention are useful. System 100 generally includes two units, a visual inspection system 110 and an abrading system 120, which each may include subunits. Both systems may be controlled by a motion controller 112, 122, respectively, which may receive instructions from one or more application controllers 150. The application controller may receive input, or provide output, to a user interface 160. Abrading unit 120 includes a force control unit 124 that can be aligned with an end-effector 126. As illustrated in FIG. 1, a force control 124 may be coupled to end effector 126, each of which is coupled to a tool 128. Tools 128 may be arranged, in one embodiment, as further described such as those described in U.S. Provisional Patent Applications with Serial Nos. 62/940950 and 62/940960, both filed November 2, 2019. However, other arrangements are also expressly contemplated. Visual inspection unit 110 may detect an area on a worksurface 130, which may then be abraded by abrading unit 120.

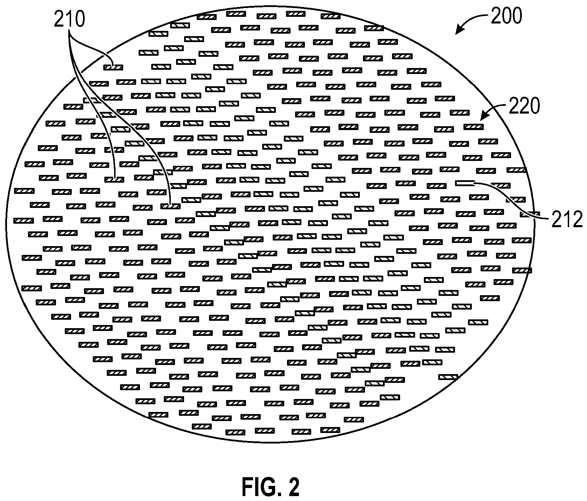

FIG. 2 is a schematic of an abrasive article with a plurality of shaped abrasive particles. For example, in many cases, coupled to the end of a tool 128 is an abrading tool, such as coated abrasive article 200. As illustrated in FIG. 2, abrasive article 200 includes a plurality of shaped abrasive particles 210 on a backing 220. In some embodiments, particles 210 are a first type of abrasive particle, and a second type of abrasive particles are also present. For example, particles 210 may be shaped abrasive particles, and crushed abrasive particles may also be present in between particles 210 on backing 220.

Each of particles 210, in some embodiments, have a microreplicated shape. For example, in some embodiments, each of abrasive particles 210 are shaped like a tetrahedron, an equilateral triangle, or another suitable shape. Each of abrasive particles 210, in some embodiments, has one or more abrading tips that are oriented to point away from backing 220.

During an abrading operation, the abrading efficacy of abrasive article 200 can vary moment to moment, based on the number and sharpness of individual particles 210 in contact with a worksurface, the roughness of the worksurface itself, and the parameters for the robotic system (e.g. speed, movement type, force applied, etc.). Currently, it is possible to know and adjust, in-situ, parameters of a robotic system, but it is not easy to know a current abrading efficiency of abrasive article 200, or a roughness of a worksurface. Were these two values known, it would be easier to select parameters for a robotic system.

Evaluating current abrading efficiency of article 200 can be done, in embodiments herein, by determining placement and wear level of an individual abrasive particle 212. This can be extrapolated to the greater number of particles 210. It is possible to simulate the cut performance as the abrasive article wears down. Typically, cut performance tends to decrease over time. It can be simulated if it the cut performance tendency is known for each material and abrasive, and the wear level needs to be periodically scanned to ensure that the simulation stays accurate over time. It may need to be paired with a cleaning system that can remove enough debris from the surface for the wear to be clearly captured through imaging systems.

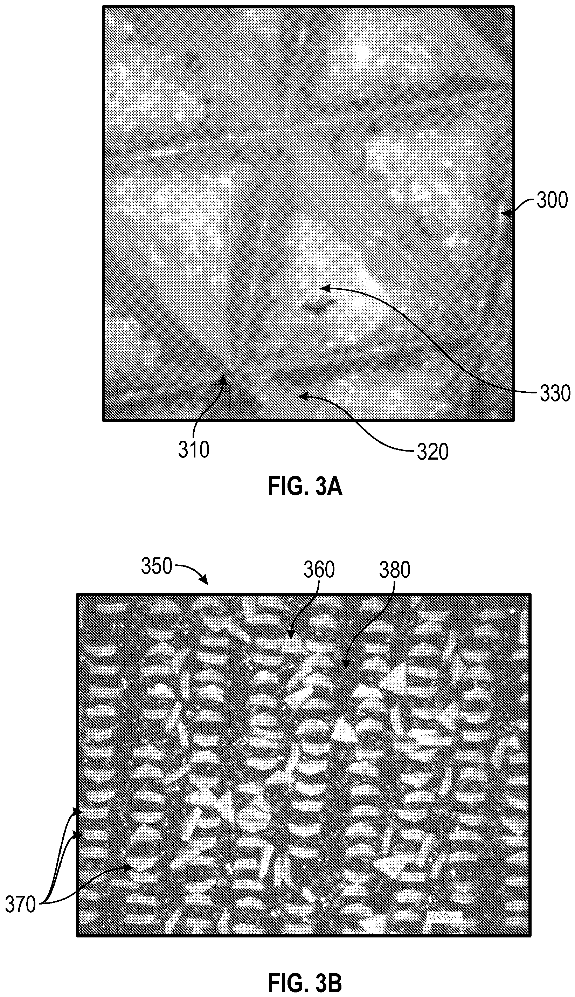

FIGS. 3A and 3B illustrate abrasive particle arrangements for an abrasive article. FIG. 3A illustrates a close up view of a TRIZACT™ abrasive disc, frequently used in the automotive paint finishing industry, as well as for other automotive part finishing. TRIZACT™ particles 300 are tetrahedron-shaped and packed into a particle pattern 310 on an abrasive backing. Before use, the particles are covered with a coating 320, such as a size or supersize coat used to increase adhesion to a backing or provide functional benefits during an abrading operation. Abrasive particle 300 has an identifiable particle tip 330 with an amount of wear that can be estimated based on a roundness seen in the image of FIG. 3A.

Systems and methods herein may provide increased benefit and accuracy for closely packed particles, such as particles 300 in a microreplicated pattern 310, because the position of one particle 300 dictates that position of other particles on a backing. However, systems and methods herein may still be useful for abrasive articles such as article 350 illustrated in FIG. 3B.

FIG. 3B illustrates an abrasive article 350 with abrasive particles 360. Abrasive particles 360 are generally deposited in a pattern 370 of rows and spacing, with secondary particles 380 in between the shaped abrasive particles 360. While not all abrasive particles 360 fall exactly into the pattern 370, an image of the abrading surface of abrasive particle 350, such as that shown in FIG. 3B can give an average number of abrasive particles, and an estimate of wear based on a roundness of tips illustrated in an imaged portion of abrasive article 350, such as the image of FIG. 3B.

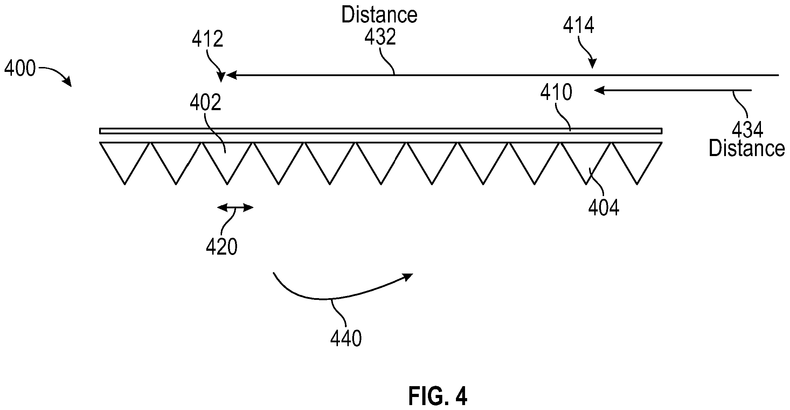

FIG. 4 illustrates a schematic of an abrasive article during an abrasive operation. A number of operational parameters can be adjusted during an operation to increase a cut rate or a cut performance of an abrasive article 400. Abrasive article 400 may be an abrasive disc, pad or belt in embodiments herein. However, when coupled to a motive robot arm, abrasive article contacts a worksurface and moves across the worksurface at a set or dynamic speed. Abrasive article 400 includes a plurality of abrasive particles 402, 404 on a backing 410.

A force may be applied to abrasive article 400, for example by a force controller, urging abrasive particles 402, 404 into contact with a worksurface. Depending on a distance from where the force is applied, e.g. the center of an abrasive disc, the force applied on an individual particle may differ, for example, such that particle 402, at a distance 432 from an abrasive disc center, experiences an applied force 412; while an abrasive particle 404, at a distance 434 from an abrasive disc center, experiences an applied force 414. The differences in applied forces 412, 414 may cause abrasive particles to wear unevenly across the surface of an abrasive disc. However, in some embodiments the size of an abrasive disc 400 is small enough that the differences are negligible and can be discounted.

As described herein, once an abrasive particle location on an abrasive article is identified, another important step is to map out a path of the abrasive particle as it contacts a worksurface. Therefore, a known particle movement 420 (e.g. from vibratory motion) and article movement 440 (e.g. rotation or movement of abrasive article) may need to be known as well. These parameters may be retrievable from a robotic abrading system, in some embodiments.

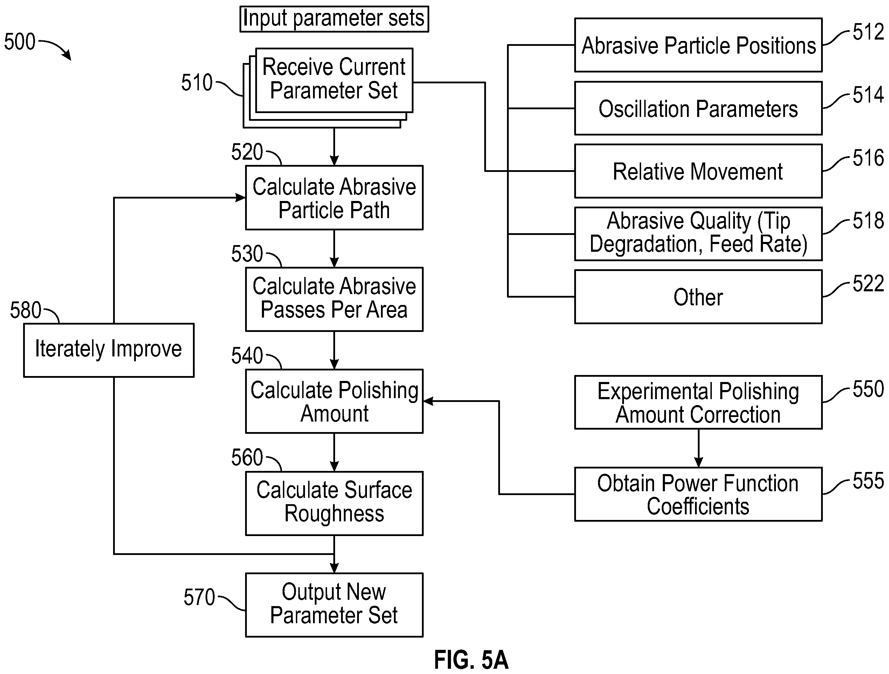

FIG. 5A illustrates a method of selecting parameters for a robotic abrading system in accordance with embodiments herein. An improved set of parameters can be calculated, using method 500, from a current set of parameters. Additionally, method 500 also outputs a surface roughness expected based on detected abrasive particle characteristics (position, sharpness, etc.).

In block 510, current input parameters are received for an abrasive operation. The parameters may be received directly from a robotic abrading system, or may be received from a controller associated with the robotic abrading system, or may be received from another source. Current input parameters may include abrasive particle positions 512, which may be detected by a sensor such as a light-based sensor, laser-based sensor, optical sensor, or another suitable sensor, and / or may be retrieved based on a known abrasive article type, particle density, etc. Oscillation parameters 514 of an abrasive article and, consequently, of individual abrasive particles, may also be retrieved. Oscillation parameters 514 may include both an oscillation frequency and amplitude. Relative movement parameters 516 of the abrasive article and the workpiece may be retrieved. For example, the abrasive article may be moved in a linear motion, rotary motion, orbital motion, or random orbital motion, and the workpiece surface may also be in motion during the abrasive operation. Information about an abrasive article quality 518 may also be retrieved, such as an amount of tip degradation (e.g. a current sharpness) and / or a feed rate of the abrasive article. Other parameters 522, such as an applied force to an abrasive article, may also be retrieved.

In block 520, an abrasive particle path is calculated. The polishing path of each abrasive particle is calculated based on the known position of an abrasive particle on an abrasive article surface, the known oscillatory movement of the abrasive article, and the relative movement of the abrasive article with respect to the workpiece. In some embodiments, an average expected position of abrasive particles is used, for example when shaped abrasive particles are dispersed in an imperfect pattern on the surface. However, in other embodiments, substantially the exact position of each particle is known based on a known position of one abrasive particle because of the matrixed positioning of the particles. Some exceptions due to shelling or imperfect particle embedding are possible.

Based on known parameters of how the robotic abrading machine moves the abrasive article, the movement of each abrasive particle can be extrapolated - the back and forth movement of oscillation on combination with the rotary movement creates a path.

In block 530, abrasive passes per area are calculated. With a known path of each abrasive particle, it is possible to segment a surface of a workpiece such that a number of times each abrasive grain passes through a surface area can be calculated. For example, a number of times an abrasive particle passes through an area segment from left to right through a segmented area due to oscillation, and how often the particle passes through the area due to rotational movement.

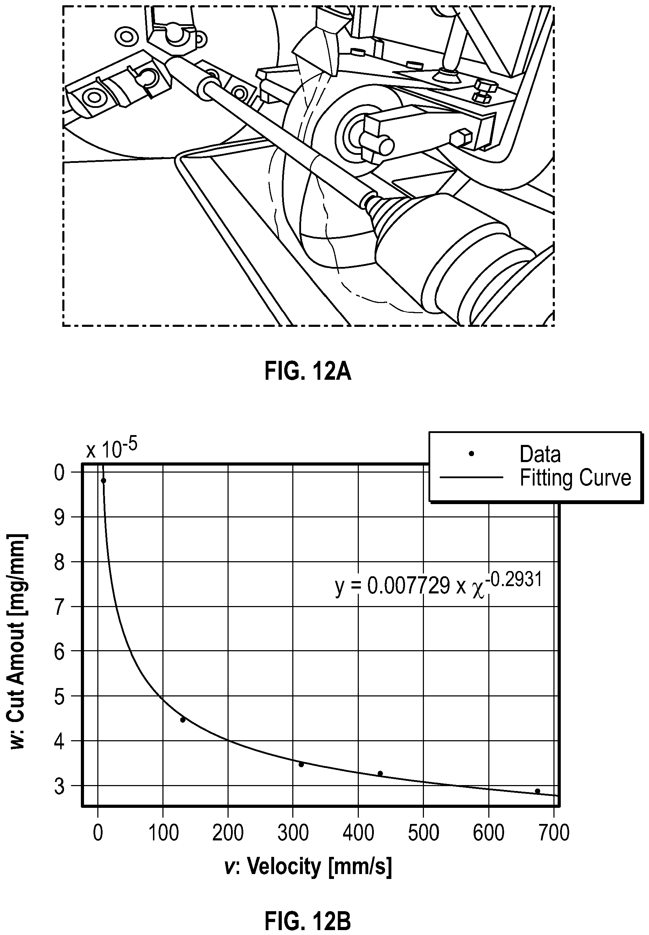

In block 550, an experimental polishing amount correction is retrieved. As described above with respect to FIG. 3B, in some instances an abrasive article only has an average particle density and average particle pattern. However, an experimental correction can be calculated for known products. Experimental polishing amount corrections are calculated by obtaining an amount of a polishing volume per unit distance with respect to relative velocity as illustrated in FIGS. 12A and 12B, in which a cut amount of a carbon steel rod was measured each rotation, and a calibration curve was created accordingly. The cut amount was calculated by weight difference.

In block 555, power function coefficients are obtained using the relative velocity experimental data of step 550. In some embodiments, the power functions are obtainable, for example from a manufacturer of an abrasive article, and are retrievable, for example, in step 510. cut data is compared to rotational speed and a curve is plotted according to the function:

$$\mathrm{w} = \alpha v^{\beta}$$

Equation 1

Where w is a polishing amount per unit distance, and v is velocity.

In block 540, a removal rate is calculated. The removal rate per segmented area of a worksurface is calculated using the experimentally obtained correction coefficients using Equation 2, below.

$$W_i = n_i \alpha v_i^{\beta}$$

Equation 2

In block 560, a post-polishing roughness of the worksurface is calculated by obtaining a roughness curve from the calculation result of Equation 2. From the polishing map obtained (the polishing amount per unit distance), the relative polishing depth of each point along a surface can be calculated. Then, a cross-section curve is obtained, e.g. the curve in FIG. 12B. At larger values on the cross-section curve, polishing is deeper. The roughness curve can be obtained by applying a high pass filter to the cross-section curve. A surface roughness is then calculated using the roughness curve.

In block 580, the calculation steps of blocks 520, 530, 540 and 560 are iteratively re-calculated by varying one or more of the input parameters in order to determine an improved set of parameters

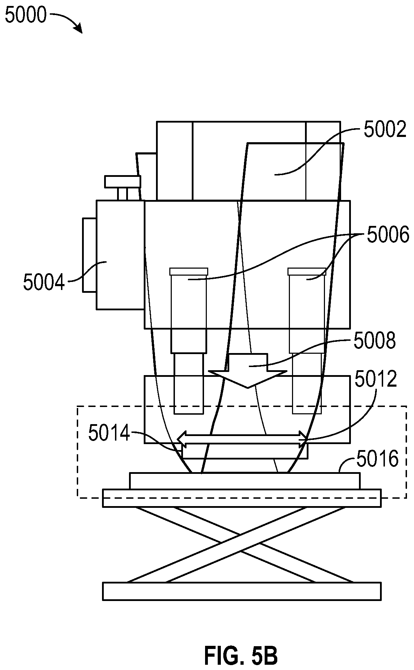

In block 570, once a preferred set of parameters is determined, the new parameter set is output. In some embodiments, with the output parameter set is a calculated surface roughness associated with the new parameter sets. The parameter sets may include parameters for any suitable abrasive system. FIG. 5B illustrates one such system for which parameters may be generated and output. System 5000 includes a motor 5002 that oscillates. A parameter set includes an oscillation frequency, which may vary from 100-1400cpm and an oscillation amplitude, which may vary between 0.1-2.0 mm. The parameter set may also include a pressure of an air regulator 5004, air cylinders 5006, and a downward pressure 5008. The parameter set may also include an oscillating direction 5012. The parameter set may specify a backup pad 5014. The pressure set may also set a workpiece speed for a workpiece 5016. For example, a valve may be rotated between 100-2000 rpm.

For molded abrasive structures, such as Trizact®, sold by 3M Company, the 3D pattern is well controlled during manufacturing, resulting in abrasive tips that have the same height and are uniformly aligned. It may even be possible to know the position of abrasive particles without imaging the abrasive structure.

In the case of abrasive structures with regularly or evenly spaced and aligned abrasive particles, such as Cubitron II®, sold by 3M Company, may have averaged abrasive particle density, the tip position is less precisely controlled. For such abrasive structures, imaging of the abrasive article surface is needed to have precise location information. However, regularly spaced abrasive particle structures may still be easier than traditional abrasive structures because the size and shape of precision shaped abrasive grain is uniformly controlled. Additionally, the density of tips is relatively smaller (due to the bigger tip size) leading to a lower calculation burden for soft/hardware.

Traditional abrasives have wider variation and fluctuation in abrasive particles, so camera imaging information is required, and calculation is more difficult due to the variety of shape/size/location and larger density of tips (requiring larger number of tips to calculate). However, a calculation curve can still be created and applied, given enough imaging information.

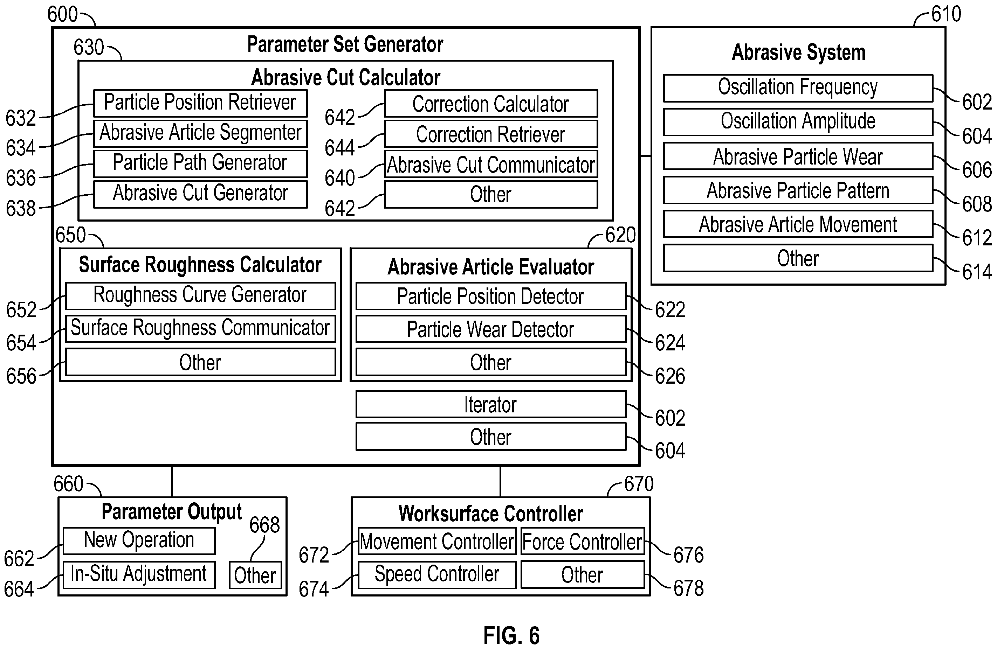

FIG. 6 illustrates a parameter set generator in accordance with embodiments herein. System 600 may be useful for initially setting up a robotic abrading system, such as system 610, in some embodiments. In other embodiments, system 610 may be in between operations or currently operating when a request for a new parameter set is received by parameter set generator 600.

Parameter set generator 600, in addition to iteratively calculating an improved parameter set, outputs an abrasive cut rate and a surface roughness based on the inputs received from abrasive system 610 or other sources. Abrasive system 610 may provide information about a current set of parameter settings, which may be default settings, last operation settings, current operation settings, etc. For example, abrasive system 610 may have an oscillation frequency 602 and oscillation amplitude 604. Abrasive system 610 has a current abrasive article coupled to it, the abrasive article having a number of abrasive particles on a backing or exposed through a resin. Each abrasive particle has an associated amount of wear 606, and the abrasive particles are in a pattern 608. The abrasive article may also move during in an abrasive operation, for example an abrasive belt may be fed through abrasive system 610 at a feed rate 612, or an abrasive disc may move in a linear, rotary, orbital, or random orbital movement pattern. Abrasive system 610 may also include other parameters or components.

An abrasive article evaluator 620 may evaluate a current condition of an abrasive article. For example, abrasive article evaluator may initially detect abrasive particle positions in an abrasive particle, using particle position sensor 622. Particle position sensor 622 may be any sensor capable of detecting positional information about abrasive particles. For example, an optical sensor, such as a camera, may capture information about an abrasive article, including the position of one or more abrasive particles, or a touch sensor or a LIDAR system. Additionally, an end effector, sander or force control unit may also be able to detect and provide particle positions and serve as particle position retriever 632.

Abrasive article evaluator 620 may also retrieve wear information for the abrasive article, for example based on wear of the detected abrasive particles, using particle wear detector 624. Abrasive article evaluator may have other functionality 626. For example, in embodiments where abrasive particle pattern 608 is an imperfect pattern, other functionality 626 may determine average particle positions based on detected particle positions, and / or an average wear based on detected wear of a number of particles

Abrasive cut calculator 630 receives positional information for one or more abrasive particles on an abrasive article using particle position retriever 632. Positional information may be received from abrasive system 610, for example as a known particle pattern recognized by abrasive system 610 or abrasive article evaluator 620. In response, a CAD drawing of a TRIZACT® mold for example, may be retrieved. The known particle pattern may be retrieved from a database containing CAD drawings for known particle patterns. Positional information may also be received directly from a sensor responsible for capturing such positional information, such as position detector 622. In one embodiment, particle position retriever 632 is device 716 (in particular, processor 717, I/O 723 and/or memory 721).

Based on retrieved particle positions, an abrasive article segmenter 634 may segment the abrasive article into a number of subportions, for example based on circumferential and radial directions. A particle path generator 636 may determine, based on the parameters received from abrasive system 610, a path of each abrasive particle during an abrasive operation.

Different abrasive materials may behave differently than expected, and may need a correction factor from expected calculations. The correction factor may be expressed by the correction coefficients $\alpha$ and $\beta$ of Equation 1. Correction calculator 642 may calculate correction factors based on provided data for a given type of abrasive article. However, in other embodiments, the correction coefficients may be known from previous calculations, and a correction retriever 644 may retrieve them from a database (not shown in FIG. 6). Using the correction factors, an abrasive cut generator 638 may generate an abrasive cut profile. The abrasive cut profile may be communicated using an abrasive cut communicator.

Parameter set generator 600 may also output a surface roughness, calculated by surface roughness calculator 650. A roughness curve is generated, by roughness curve generator 652, based on the abrasive cut profile generated by abrasive cut generator 638. The surface roughness communicator may provide the surface roughness curve as an output of the calculation.

Abrasive cut calculator 630 and surface roughness calculator 650 are particularly useful for understanding performance of abrasive system 610 for a particular set of parameters. It may be helpful to have a cut and surface roughness profile to better understand how or why system 610 is performing. For example, a given abrasive article may be leaving unwanted scratches on a surface and understanding current performance behavior for current parameter sets may help to troubleshoot outcomes. If normal curve data is available for a real calculation curve, it can be determined experimentally what is different from the normal curve using abrasive cut calculator 630 and surface roughness calculator 650.

However, parameter set generator 600, based on the calculated abrasive cut and surface roughness, may also generate a new parameter set. If it is desired to increase a cut rate, parameters can be changed to increase the abrasive cut rate. Parameter set generator 600 may, using iterator 602, alter potential parameters 602-612 until an abrasive cut rate is maximized, in one embodiment. Parameter set generator 600 may, using iterator 602, alter potential parameters 602-612 until a desired surface roughness is achieved.

Parameter set generator 600 may also have other functionality 604. For example, in addition to receiving parameters from abrasive system 610, additional parameters may be considered for improved performance, such as parameters of a worksurface controller 670, in embodiments where the worksurface is not stationary. A movement controller 672 may provide information about a movement pattern of a worksurface - e.g. linear, rotary, orbital, random orbital, or another movement pattern. A speed controller 674 may provide information about a speed at which a worksurface moves. Force controller 676 may provide information about a force at which a worksurface contacts an abrasive system. While force controller 676 is illustrated as part of worksurface controller 670, it is also expressly contemplated that, in other embodiments, force controller 676 may be part of abrasive system 610.

Parameters generated by parameter set generator 600 may be sent directly to abrasive system 610 and / or worksurface controller 670 by parameter output 660. A new parameter set may be sent as a command to adjust a current abrasive operation in-situ 664. The new parameter set may also be sent as instructions for a new abrasive operation 662. The new parameter set may also be communicated in another manner 668, for example sent as a report to a display or other reporting system.

It will also be noted that the elements of systems described herein, or portions of them, can be disposed on a wide variety of different devices. Some of those devices include servers, desktop computers, laptop computers, imbedded computer, industrial controllers, tablet computers, or other mobile devices, such as palm top computers, cell phones, smart phones, multimedia players, personal digital assistants, etc.

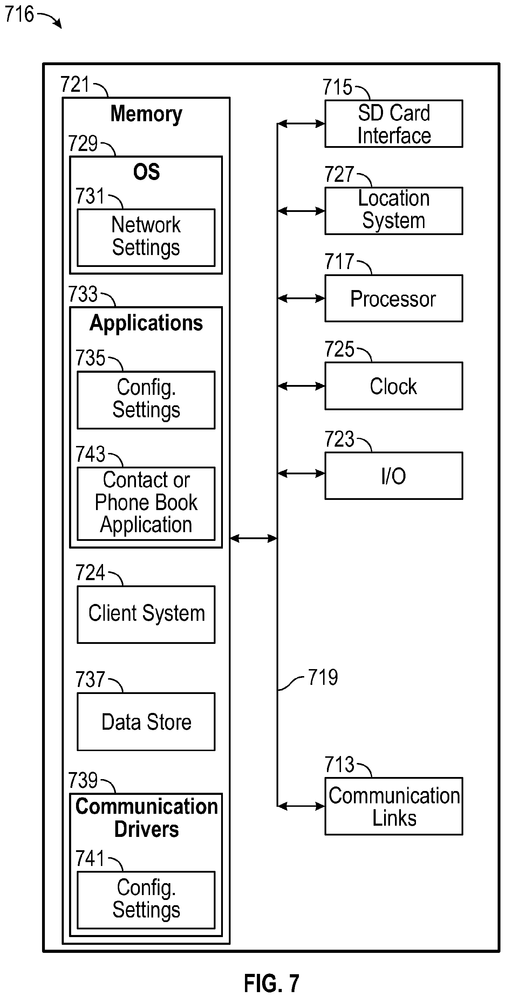

FIGS. 7-9 illustrates an example computing systems that may be used in accordance with embodiments herein.

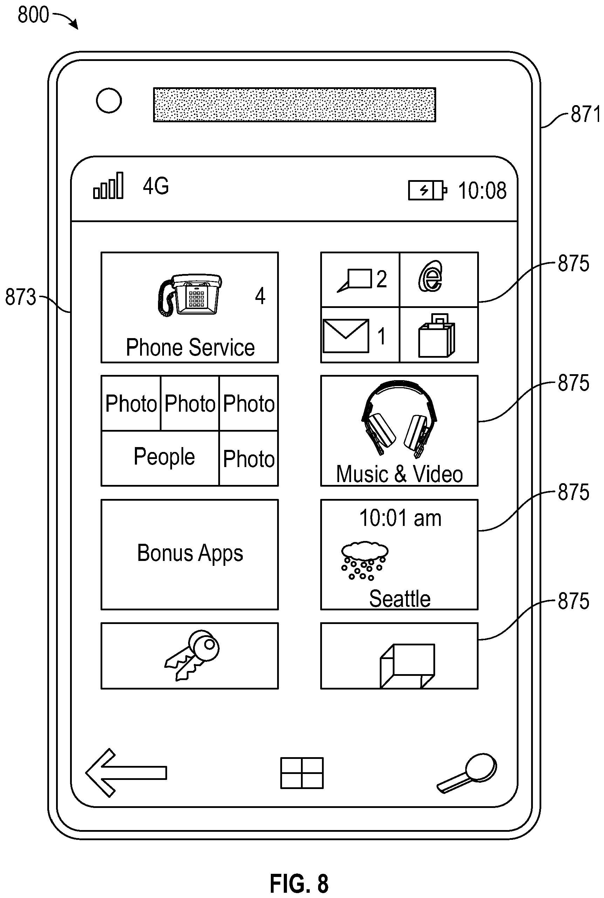

FIG. 7 is a simplified block diagram of one illustrative example of a handheld or mobile computing device that can be used as a user's or client's handheld device 716, in which the present system (or parts of it) can be deployed. For instance, a mobile device can be deployed in the operator compartment of parameter set generator 600 for use in generating, processing, or displaying the data. FIG. 8 is another example of a handheld or mobile device.

FIG. 7 provides a general block diagram of the components of a client device 716 that can run some components shown and described herein. Client device 716 interacts with them, or runs some and interacts with some. In the device 716, a communications link 713 is provided that allows the handheld device to communicate with other computing devices and under some embodiments provides a channel for receiving information automatically, such as by scanning. Examples of communications link 713 include allowing communication though one or more communication protocols, such as wireless services used to provide cellular access to a network, as well as protocols that provide local wireless connections to networks.

In other examples, applications can be received on a removable Secure Digital (SD) card that is connected to an interface 715. Interface 715 and communication links 713 communicate with a processor 717 (which can also embody a processor) along a bus 719 that is also connected to memory 721 and input/output (I/O) components 723, as well as clock 725 and location system 727.

I/O components 723, in one embodiment, are provided to facilitate input and output operations and the device 916 can include input components such as buttons, touch sensors, optical sensors, microphones, touch screens, proximity sensors, accelerometers, orientation sensors and output components such as a display device, a speaker, and or a printer port. Other I/O components 723 can be used as well.

Clock 725 illustratively comprises a real time clock component that outputs a time and date. It can also provide timing functions for processor 717.

Illustratively, location system 727 includes a component that outputs a current geographical location of device 716. This can include, for instance, a global positioning system (GPS) receiver, a LORAN system, a dead reckoning system, a cellular triangulation system, or other positioning system. It can also include, for example, mapping software or navigation software that generates desired maps, navigation routes and other geographic functions.

Memory 721 stores operating system 729, network settings 731, applications 733, application configuration settings 735, data store 737, communication drivers 739, and communication configuration settings 741. Memory 721 can include all types of tangible volatile and non-volatile computer-readable memory devices. It can also include computer storage media (described below). Memory 721 stores computer readable instructions that, when executed by processor 717, cause the processor to perform computer-implemented steps or functions according to the instructions. Processor 717 can be activated by other components to facilitate their functionality as well.

FIG. 8 shows that the device can be a smart phone 871. Smart phone 871 has a touch sensitive display 873 that displays icons or tiles or other user input mechanisms 875. Mechanisms 875 can be used by a user to run applications, make calls, perform data transfer operations, etc. In general, smart phone 871 is built on a mobile operating system and offers more advanced computing capability and connectivity than a feature phone.

Note that other forms of the devices 816 are possible.

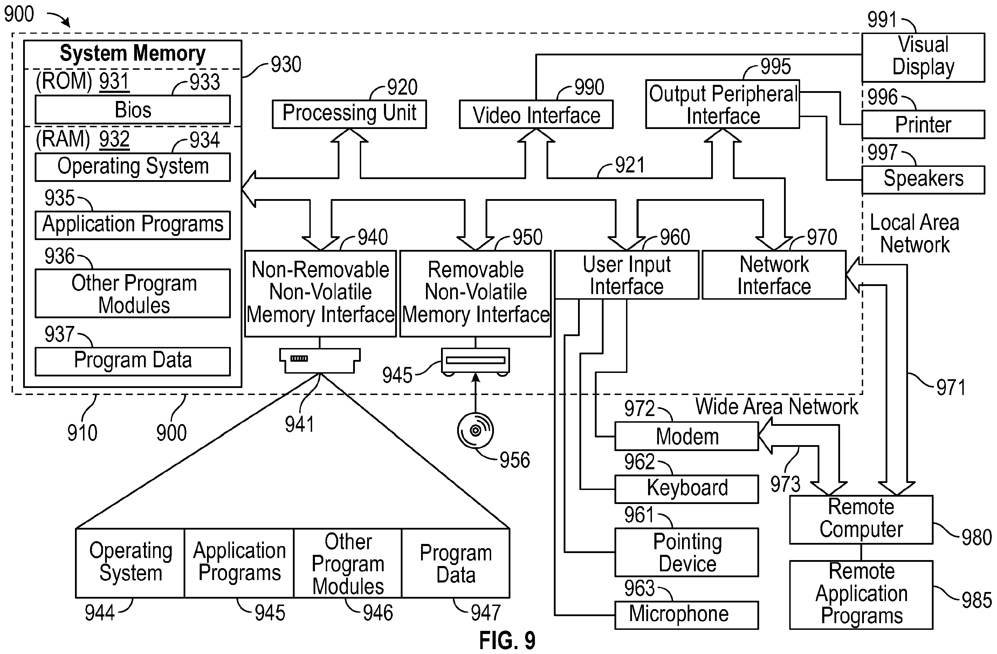

FIG. 9 is a block diagram of a computing environment that can be used in embodiments shown in previous Figures.

FIG. 9 is one example of a computing environment in which elements of systems and methods described herein, or parts of them (for example), can be deployed. With reference to FIG. 9, an example system for implementing some embodiments includes a general-purpose computing device in the form of a computer 910. Components of computer 910 may include, but are not limited to, a processing unit 920 (which can comprise a processor), a system memory 930, and a system bus 921 that couples various system components including the system memory to the processing unit 920. The system bus 921 may be any of several types of bus structures including a memory bus or memory controller, a peripheral bus, and a local bus using any of a variety of bus architectures. Memory and programs described with respect to systems and methods described herein can be deployed in corresponding portions of FIG. 9.

Computer 910 typically includes a variety of computer readable media. Computer readable media can be any available media that can be accessed by computer 910 and includes both volatile/nonvolatile media and removable/non-removable media. By way of example, and not limitation, computer readable media may comprise computer storage media and communication media. Computer storage media is different from, and does not include, a modulated data signal or carrier wave. It includes hardware storage media including both volatile/nonvolatile and removable/non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 910. Communication media may embody computer readable instructions, data structures, program modules or other data in a transport mechanism and includes any information delivery media. The term "modulated data signal" means a signal that has one or more of its characteristics set or changed in such a manner as to encode information in the signal.

The system memory 930 includes computer storage media in the form of volatile and/or nonvolatile memory such as read only memory (ROM) 931 and random-access memory (RAM) 932. A basic input/output system 933 (BIOS) containing the basic routines that help to transfer information between elements within computer 910, such as during start-up, is typically stored in ROM 931. RAM 932 typically contains data and/or program modules that are immediately accessible to and/or presently being operated on by processing unit 920. By way of example, and not limitation, FIG. 9 illustrates operating system 1134, application programs 935, other program modules 936, and program data 937.

The computer 910 may also include other removable/non-removable and volatile/nonvolatile computer storage media. By way of example only, FIG. 9 illustrates a hard disk drive 941 that reads from or writes to non-removable, nonvolatile magnetic media, nonvolatile magnetic disk 952, an optical disk drive 955, and nonvolatile optical disk 956. The hard disk drive 941 is typically connected to the system bus 921 through a non-removable memory interface such as interface 940, and optical disk drive 955 are typically connected to the system bus 921 by a removable memory interface, such as interface 950.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 9, provide storage of computer readable instructions, data structures, program modules and other data for the computer 910. In FIG. 9, for example, hard disk drive 941 is illustrated as storing operating system 1144, application programs 945, other program modules 946, and program data 947. Note that these components can either be the same as or different from operating system 934, application programs 935, other program modules 936, and program data 937.

A user may enter commands and information into the computer 910 through input devices such as a keyboard 962, a microphone 963, and a pointing device 961, such as a mouse, trackball or touch pad. Other input devices (not shown) may include a joystick, game pad, satellite receiver, scanner, or the like. These and other input devices are often connected to the processing unit 920 through a user input interface 960 that is coupled to the system bus, but may be connected by other interface and bus structures. A visual display 991 or other type of display device is also connected to the system bus 921 via an interface, such as a video interface 990. In addition to the monitor, computers may also include other peripheral output devices such as speakers 997 and printer 996, which may be connected through an output peripheral interface 995.

The computer 910 is operated in a networked environment using logical connections, such as a Local Area Network (LAN) or Wide Area Network (WAN) to one or more remote computers, such as a remote computer 980.

When used in a LAN networking environment, the computer 910 is connected to the LAN 971 through a network interface or adapter 970. When used in a WAN networking environment, the computer 910 typically includes a modem 972 or other means for establishing communications over the WAN 1173, such as the Internet. In a networked environment, program modules may be stored in a remote memory storage device. FIG. 9 illustrates, for example, that remote application programs 985 can reside on remote computer 980.

## <u>Examples</u>

EXAMPLE 1

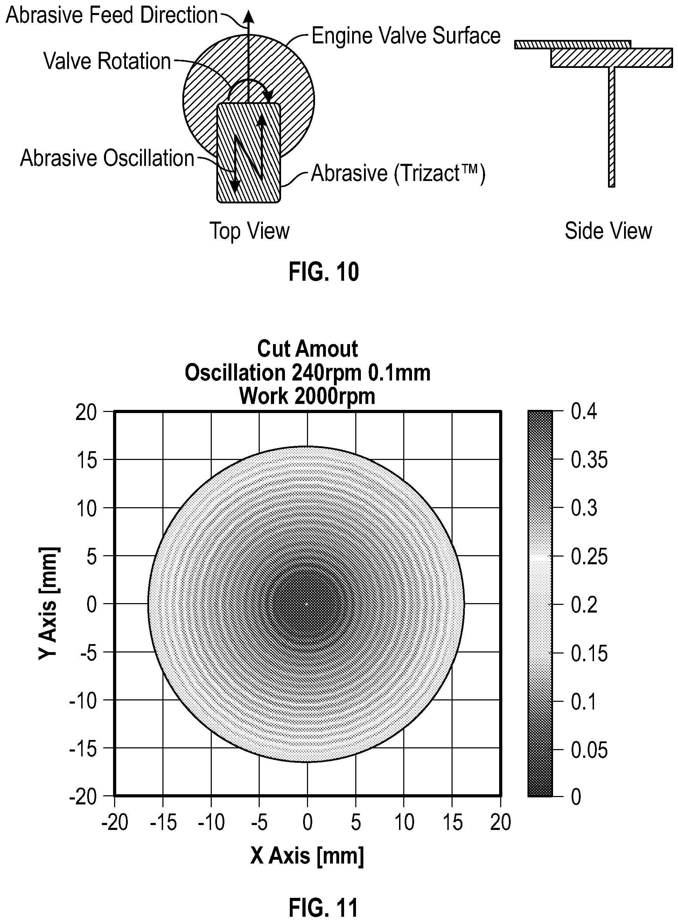

Engine valves are polished using a valve rotation movement and an abrasive oscillation movement, as illustrated in FIG. 10. However, while the examples illustrate valve polishing, it is expressly contemplated that systems and methods described herein may be useful for other automotive components, such as engine parts such like crank shaft or mission parts.

TRIZACT® abrasive grain is used for this application. The important parameters in this process are the position of abrasive grain tips, oscillation frequency, oscillation amplitude, valve rotation velocity and abrasive feed rate. The machine, illustrated in FIG. 12A, was provided by Sanshine co. ltd. TRIZACT® abrasive particle position info was obtained from the mold shape for microreplication as a matrix data. It was downloaded from a cloud server. For this example, the pattern of the TRIZACT® abrasive particles was 130um pitch, with regularity as row/matrix. Both width and length were 25mm.

Cut performance was evaluated based on the polishing path, and the numerical analysis software MATLAB was used for this analysis. The polishing path can be calculated from the machining process parameters. Abrasive tips in 1 mm2 were used for calculating the path. The material was an S45C with a thickness of 10mm. The force setting was 2mm, with a contact wheel having a hardness of 70. The rotation speeds were 1289 rpm, 827 rpm, 597 rpm, 249 rpm and 18 rpm. The polishing time was 15s, and the tests were repeated three times for each speed. The cut amount was calculated based on the weight difference before and after. Additionally, the abrasive used area changed with each speed, so the length of wear was checked and the constancy cut amount was calculated by length.

As shown in FIG. 11, the number of polishing times in each divided area were calculated to obtain a polishing density map. However, polishing density is not sufficient for evaluating cut performance. This is because cut performance is considered to depend on velocity, and relative velocity is different for each area on the valve surface.

Therefore, the effect of velocity should be considered for cut performance. In order to investigate the effect of velocity, a basic experiment was conducted using a lathe as shown in Fig. 12A A cut amount of a carbon steel rod was measured for each rotation velocity. Fig. 12B shows the experimental result. From this result, it was found that the cut amount per unit distance decreased exponentially with respect to the velocity. It should be noted that the unit of the cut amount is not the unit of time but the unit of distance. And the reason for this exponential decrease is considered to be the effect of a lubricant. From this experimental result, the polishing density was modified to obtain the polishing amount map as shown in Fig. 7.

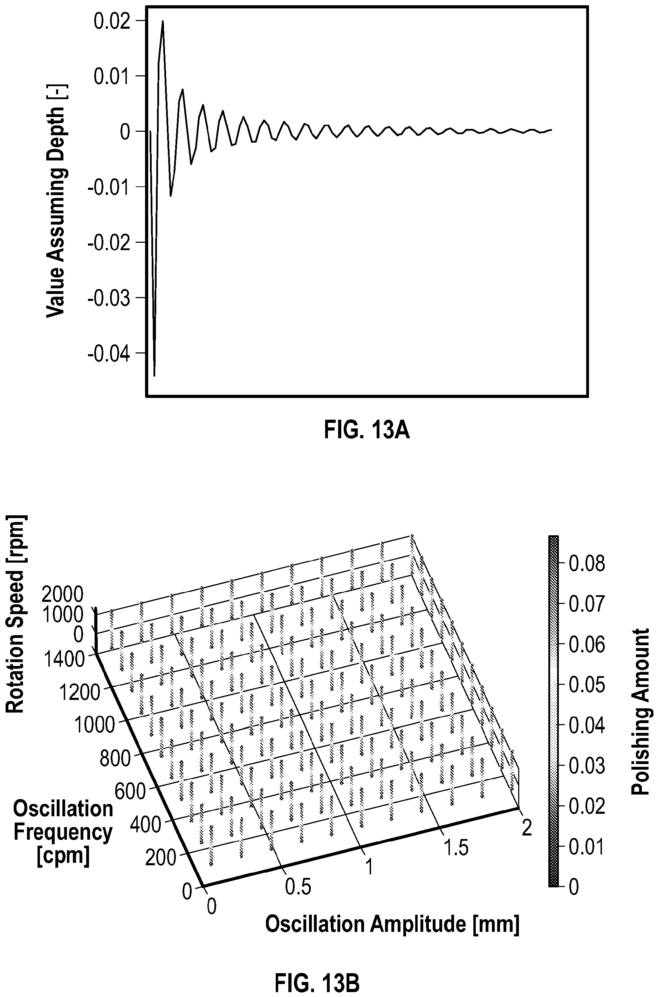

A surface roughness is evaluated from the polishing amount map. A cross-section curve can be obtained by extracting the horizontal axis values of the polishing amount map. Then, a roughness curve is evaluated by conducting high-pass filter to the cross-section curve as shown in Fig. 13A. A value assuming surface roughness is evaluated from the roughness curve. This value becomes more accurate by dividing the evaluating area into smaller pieces and increasing resolution.

To find the best parameter set, oscillation frequency, oscillation amplitude and valve rotation speed were varied as shown in Table 1.

Table 1 Evaluation parameters.

| Oscillation frequency | 100~1400 [cpm] |
|---|---|
| Oscillation amplitude | 0.1~2.0 [mm] |
| Valve rotation speed | 100~2000 [rpm] |

Fig. 13B shows the polishing amount result for all patterns. One point in this figure indicates the average polishing amount obtained by one parameter set. The color shows the polishing amount level, with a higher polishing amount in the center, around 0.4, and a lower polishing amount near the edges, going down to about 0.2. As shown in Table 2, the best parameter set was obtained from this result. It was found that it is necessary to set appropriate parameters in consideration of the velocity dependence of the cut amount, instead of using the maximum velocity as parameters.

Table 2 The best parameter set.

| Oscillation frequency | 240 [cpm] |
|---|---|
| Oscillation amplitude | 0.1 [mm] |
| Valve rotation speed | 2000 [rpm] |

## EXAMPLE 2

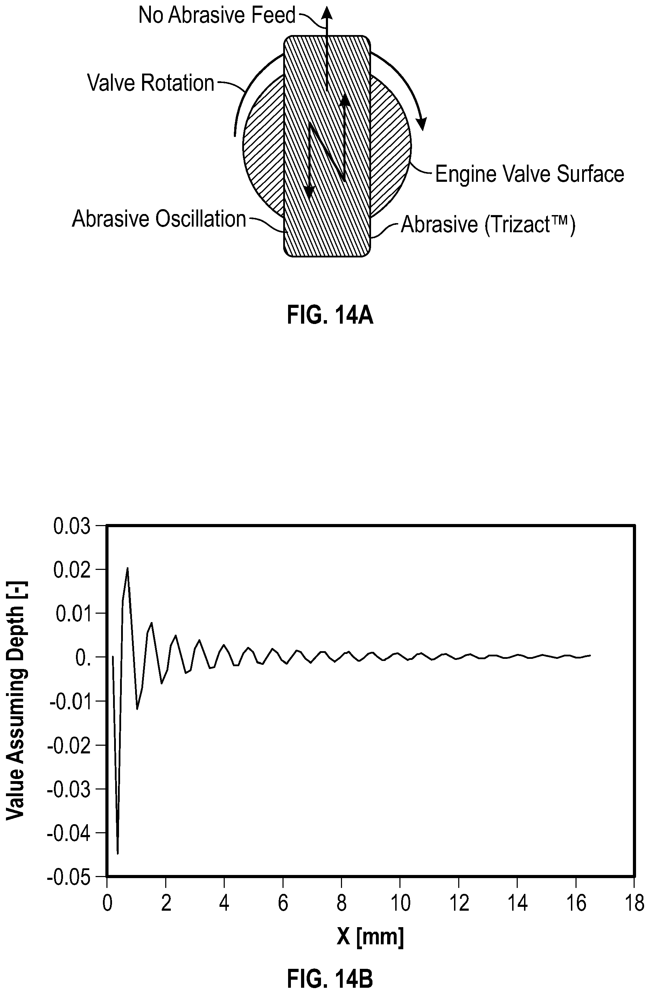

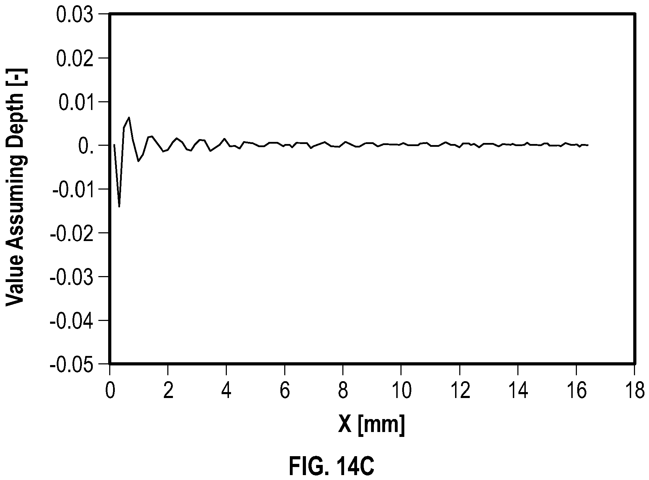

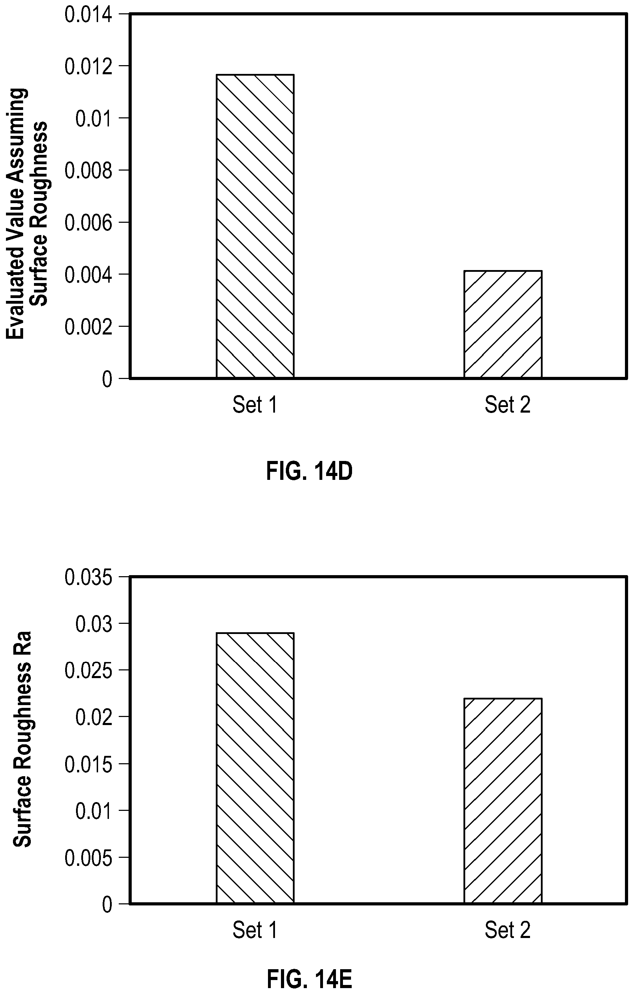

To validate this evaluation method, a simple experiment using the engine valve as shown in Fig. 14A was conducted. Table 3 shows the experimental condition. Only the oscillation frequency was changed in this experiment. Fig. 14B and Fig. 14C shows roughness curve evaluated by the developed method using set 1 and set 2 parameters. Fig. 14D shows the value assuming a surface roughness evaluated from the roughness curves. As shown in Fig. 14D, the surface roughness evaluated by the set 2 condition had a lower surface roughness. Fig. 14E shows a result of surface roughness evaluated by the experiment. As shown in Fig. 14E, the engine valve polished by the set 2 condition had a finer surface roughness. From these results, it was found that the evaluation results of the developed method correlate with the experimental results. Therefore, it is concluded that the developed method is able to evaluate the value which is related to the surface roughness.

Table 3 Experimental conditions for validation experiment.

| Parameter | Set 1 | Set 2 |
|---|---|---|
| Oscillation frequency [cpm] | 1400 | 500 |
| Oscillation amplitude [mm] | ±1.0 | ±1.0 |
| Valve rotation speed [rpm] | 1800 | 1800 |

**Claims**

1. An abrading operation monitoring system comprising:

a particle tracking system that receives, from a particle position retriever (632), a position of an abrasive particle (300) on an abrasive article surface,

an abrasive operation parameter retriever that retrieves, using a communication component, a current set of operation parameters for an abrading machine;

an abrasive volume calculator (630) that calculates an abrading volume for a worksurface contacted by the abrasive article surface based on a path of the tracked abrasive particle and the current set of operation parameters; and

an abrasive parameters adjuster that is configured to provide a new set of operation parameters for the abrading system based on the calculated abrading volume; and

wherein the abrading system is configured to implement the new set of operation parameters.

2. The system of claim 1, wherein the communication component is configured to communicate the new set of operation parameters to the abrading machine.

3. The system of claim 1 or 2, wherein the abrasive parameters adjuster is configured to provide the new set of operation parameters using an iterative process.

4. The system of any of claims 1-3, and further comprising:
a surface roughness calculator (650) that calculates a surface roughness of the worksurface based on the calculated abrading volume.

5. The system of any of claims 1-4, wherein the abrasive volume calculator (630) calculates the abrading volume based on a velocity of the tracked abrasive particle.

6. The system of any of claims 1-5, wherein the current set of operation parameters comprise an oscillation frequency of the abrading system, an oscillation amplitude of the abrading system, a rotational speed of the abrading system, a rotational speed of the worksurface, or a force applied by the abrading system on the abrasive article.

7. The system of any of claims 1-6, wherein the current set of operational settings are a last operation set of operational settings for the abrading machine; a default set of operational settings for the abrading machine; or are obtained in-situ.

8. A method of adjusting operation parameters for a robotic abrading system (100) using an operation monitoring system of claim 1, the method comprising:

detecting, using a sensor (622), a position of an abrasive particle on an abrasive article;
retrieving a first set of operational parameters for the robotic abrading system, from a computing system associated with the robotic abrading system;
calculating a path of the detected abrasive particle on a worksurface in contact with the abrasive article;
calculating a first volumetric cut rate for the abrasive article, based in the calculated path and the retrieved operational parameters; and
selecting a second set of operational parameters for the robotic abrading system, wherein the second set of operational parameters produces a second cut volume rate that differs from the first volumetric cut rate.

9. The method of claim 8, and further comprising:
detecting a wear amount of the abrasive particle.

10. The method of claim 8 or 9, and further comprising:
calculating a surface roughness of the worksurface.

11. The method of claim 10, wherein calculating a surface roughness comprises calculating a relative velocity of the detected abrasive particle along the path.

12. The method of any of claims 8-11, wherein calculating the first volumetric cut rate comprises applying a polishing amount correction.

13. The method of any of claims 8-12, wherein the first set of operational parameters comprises an oscillation frequency, an oscillation amplitude, a relative velocity between the abrading system and the worksurface, an applied force on the abrasive article or an abrasive article wear rate operation set of operational settings for the robotic abrading system, a default set of operational settings for the robotic abrading system; or are obtained in-situ.

14. The method of any of claims 8-13, and further comprising:
detecting a relative position of the detected abrasive particle within a plurality of abrasive particles.

15. The method of any of claims 8-14, and further comprising detecting a geometry of the detected abrasive particle or an orientation of the detected abrasive particle.

**Patentansprüche**

1. Ein Schleifvorgangüberwachungssystem, aufweisend:

ein Teilchenverfolgungssystem, das von einer Teilchenpositionsabrufvorrichtung (632) eine Position eines Schleifteilchens (300) auf einer Schleifgegenstandoberfläche empfängt;
eine Schleifvorgangparameterabrufvorrichtung, die unter Verwendung eines Kommunikationsbestandteils einen aktuellen Satz von Vorgangsparametern für eine Schleifmaschine abruft; einen Schleifvolumenrechner (630), der ein Schleifvolumen für eine Arbeitsoberfläche berechnet, die durch die Schleifgegenstandoberfläche kontaktiert wird, basierend auf einem Pfad des verfolgten Schleifteilchens und dem aktuellen Satz von Vorgangsparametern; und
einen Schleifparametereinsteller, der konfiguriert ist, um einen neuen Satz von Vorgangsparametern für das Schleifsystem bereitzustellen, basierend auf dem berechneten Schleifvolumen; und
wobei das Schleifsystem konfiguriert ist, um den neuen Satz von Vorgangsparametern zu implementieren.

2. Das System nach Anspruch 1, wobei der Kommunikationsbestandteil konfiguriert ist, um den neuen Satz von Vorgangsparametern an die Schleifmaschine zu kommunizieren.

3. Das System nach Anspruch 1 oder 2, wobei der Schleifparametereinsteller konfiguriert ist, um den neuen Satz von Vorgangsparametern unter Verwendung eines iterativen Prozesses bereitzustellen.

4. Das System nach einem der Ansprüche 1 bis 3, und ferner aufweisend:
einen Oberflächenrauheitsrechner (650), der eine Oberflächenrauheit der Arbeitsoberfläche basierend auf dem berechneten Schleifvolumen berechnet.

5. Das System nach einem der Ansprüche 1 bis 4, wobei der Schleifvolumenrechner (630) das Schleifmittelvolumen basierend auf einer Geschwindigkeit des verfolgten Schleifteilchens berechnet.

6. Das System nach einem der Ansprüche 1 bis 5, wobei der aktuelle Satz von Vorgangsparametern eine Schwingungsfrequenz des Schleifsystems, eine Schwingungsamplitude des Schleifsystems, ein Rotationstempo des Schleifsystems, ein Rotationstempo der Arbeitsoberfläche oder eine durch das Schleifsystem auf den Schleifgegenstand ausgeübte Kraft aufweist.

7. Das System nach einem der Ansprüche 1 bis 6, wobei der aktuelle Satz von Vorgangseinstellungen ein letzter Vorgangssatz von Vorgangseinstellungen für die Schleifmaschine ist; ein Standardsatz von Vorgangseinstellungen für die Schleifmaschine; oder vor Ort erhalten werden.

8. Ein Verfahren zum Einstellen von Vorgangsparametern für ein robotisches Schleifsystem (100) unter Verwendung eines Vorgangüberwachungssystems nach Anspruch 1, das Verfahren aufweisend:

Detektieren, unter Verwendung eines Sensors (622), einer Position eines Schleifteilchens auf einem Schleifgegenstand; Abrufen eines ersten Satzes von Vorgangsparametern für das robotische Schleifsystem von einem Computersystem, das dem robotischen Schleifsystem zugeordnet ist;
Berechnen eines Pfads des detektierten Schleifteilchens auf einer Arbeitsoberfläche in Kontakt mit dem Schleifgegenstand;
Berechnen einer ersten volumetrischen Schnittrate für den Schleifgegenstand basierend auf dem berechneten Pfad und den abgerufenen Vorgangsparametern; und
Auswählen eines zweiten Satzes von Vorgangsparametern für das robotische Schleifsystem, wobei der zweite Satz von Vorgangsparametern eine zweite Schnittvolumenrate erzeugt, die sich von der ersten volumetrischen Schnittrate unterscheidet.

**9.** Das Verfahren nach Anspruch 8 und ferner aufweisend:
Detektieren eines Schleifgrads des Schleifteilchens.

**10.** Das Verfahren nach Anspruch 8 oder 9, ferner aufweisend:
Berechnen einer Oberflächenrauheit der Arbeitsoberfläche.

**11.** Das Verfahren nach Anspruch 10, wobei das Berechnen einer Oberflächenrauheit das Berechnen einer Relativgeschwindigkeit des detektierten Schleifteilchens entlang des Pfads aufweist.

**12.** Das Verfahren nach einem der Ansprüche 8 bis 11, wobei das Berechnen der ersten volumetrischen Schnittrate das Anwenden einer Poliergradkorrektur aufweist.

**13.** Das Verfahren nach einem der Ansprüche 8 bis 12, wobei der erste Satz von Vorgangsparametern eine Schwingungsfrequenz, eine Schwingungsamplitude, eine Relativgeschwindigkeit zwischen dem Schleifsystem und der Arbeitsoberfläche, eine Kraft, die auf den Schleifgegenstand ausgeübt wird, oder einen Schleifgegenstandverschleißratenvorgangssatz von Vorgangseinstellungen für das robotische Schleifsystem, einen Standardsatz von Vorgangseinstellungen für das robotische Schleifsystem aufweist; oder vor Ort erhalten werden.

**14.** Das Verfahren nach einem der Ansprüche 8 bis 13, und ferner aufweisend:
Detektieren einer relativen Position des detektierten Schleifteilchens innerhalb einer Vielzahl von Schleifteilchen.

**15.** Das Verfahren nach einem der Ansprüche 8 bis 14, und ferner aufweisend das Detektieren einer Geometrie des detektierten Schleifteilchens oder einer Ausrichtung des detektierten Schleifteilchens.

**Revendications**

**1.** Système de surveillance d'opération d'abrasion comprenant :

un système de suivi de particule qui reçoit, à partir d'un récupérateur de position de particule (632), une position d'une particule abrasive (300) sur une surface d'article abrasif ;
un récupérateur de paramètre d'opération abrasive qui récupère, à l'aide d'un composant de communication, un ensemble actuel de paramètres d'opération pour une machine d'abrasion ;
un calculateur de volume abrasif (630) qui calcule un volume d'abrasion pour une surface de travail en contact avec la surface d'article abrasif sur la base d'un trajet de la particule abrasive suivie et de l'ensemble actuel de paramètres d'opération ; et
un dispositif de réglage de paramètres abrasifs qui est configuré pour fournir un nouvel ensemble de paramètres d'opération pour le système d'abrasion sur la base du volume d'abrasion calculé ; et
dans lequel le système d'abrasion est configuré pour mettre en oeuvre le nouvel ensemble de paramètres d'opération.

**2.** Système selon la revendication 1, dans lequel le composant de communication est configuré pour communiquer le nouvel ensemble de paramètres d'opération à la machine d'abrasion.

**3.** Système selon la revendication 1 ou 2, dans lequel le dispositif de réglage de paramètres abrasifs est configuré pour fournir le nouvel ensemble de paramètres d'opération à l'aide d'un processus itératif.

**4.** Système selon l'une quelconque des revendications 1 à 3, et comprenant en outre :
un calculateur de rugosité de surface (650) qui calcule une rugosité de surface de la surface de travail sur la base du volume d'abrasion calculé.

**5.** Système selon l'une quelconque des revendications 1 à 4, dans lequel le calculateur de volume abrasif (630) calcule le volume d'abrasion sur la base d'une vitesse de la particule abrasive suivie.

**6.** Système selon l'une quelconque des revendications 1 à 5, dans lequel l'ensemble actuel de paramètres d'opération comprend une fréquence d'oscillation du système d'abrasion, une amplitude d'oscillation du système d'abrasion, une vitesse de rotation du système d'abrasion, une vitesse de rotation de la surface de travail, ou une force appliquée par le système d'abrasion sur l'article abrasif.

7. Système selon l'une quelconque des revendications 1 à 6, dans lequel l'ensemble actuel de réglages opérationnels est un ensemble de réglages opérationnels de dernière opération pour la machine d'abrasion ; un ensemble de réglages opérationnels par défaut pour la machine d'abrasion ; ou est obtenu in-situ.

8. Procédé de réglage de paramètres d'opération pour un système d'abrasion robotique (100) à l'aide d'un système de surveillance d'opération selon la revendication 1, le procédé comprenant :

la détection, à l'aide d'un capteur (622), d'une position d'une particule abrasive sur un article abrasif ;
la récupération d'un premier ensemble de paramètres opérationnels pour le système d'abrasion robotique, à partir d'un système informatique associé au système d'abrasion robotique ;
le calcul d'un trajet de la particule abrasive détectée sur une surface de travail en contact avec l'article abrasif ;
le calcul d'un premier taux de coupe volumétrique pour l'article abrasif, sur la base du trajet calculé et des paramètres opérationnels récupérés ; et
la sélection d'un second ensemble de paramètres opérationnels pour le système d'abrasion robotique, dans lequel le second ensemble de paramètres opérationnels produit un second taux de volume de coupe qui diffère du premier taux de coupe volumétrique.

9. Procédé selon la revendication 8, et comprenant en outre :
la détection d'une quantité d'usure de la particule abrasive.

10. Procédé selon la revendication 8 ou 9, et comprenant en outre :
le calcul d'une rugosité de surface de la surface de travail.

11. Procédé selon la revendication 10, dans lequel le calcul d'une rugosité de surface comprend le calcul d'une vitesse relative de la particule abrasive détectée le long du trajet.

12. Procédé selon l'une quelconque des revendications 8 à 11, dans lequel le calcul du premier taux de coupe volumétrique comprend l'application d'une correction de quantité de polissage.

13. Procédé selon l'une quelconque des revendications 8 à 12, dans lequel le premier ensemble de paramètres opérationnels comprend une fréquence d'oscillation, une amplitude d'oscillation, une vitesse relative entre le système d'abrasion et la surface de travail, une force appliquée sur l'article abrasif ou un ensemble de réglages opérationnels d'opération de taux d'usure d'article abrasif pour le système d'abrasion robotique, un ensemble de réglages opérationnels par défaut pour le système d'abrasion robotique ; ou est obtenu in-situ.

14. Procédé selon l'une quelconque des revendications 8 à 13, et comprenant en outre :
la détection d'une position relative de la particule abrasive détectée au sein d'une pluralité de particules abrasives.

15. Procédé selon l'une quelconque des revendications 8 à 14, et comprenant en outre la détection d'une géométrie de la particule abrasive détectée ou d'une orientation de la particule abrasive détectée.

FIG. 1

FIG. 2

**FIG. 3A**

**FIG. 3B**

FIG. 4

500

Input parameter sets

Receive Current Parameter Set — 510

Abrasive Particle Positions — 512

Oscillation Parameters — 514

Relative Movement — 516

Abrasive Quality (Tip Degradation, Feed Rate) — 518

Other — 522

520 — Calculate Abrasive Particle Path

530 — Calculate Abrasive Passes Per Area

580 — Iterately Improve

540 — Calculate Polishing Amount

Experimental Polishing Amount Correction — 550

560 — Calculate Surface Roughness

Obtain Power Function Coefficients — 555

570 — Output New Parameter Set

**FIG. 5A**

5000

5002

5006

5004

5008

5012

5014

5016

FIG. 5B

**FIG. 6**

EP 4 355 529 B1

716

**FIG. 7**

800

871

ooll 4G ⚡ 10:08

873

| Phone Service 4 | 💬2 @ ✉1 💼 | 875 |

Photo | Photo | Photo
People | Photo

Music & Video  875

Bonus Apps

10:01 am
Seattle  875

🔑  📦  875

← ⊞ 🔍

**FIG. 8**

**FIG. 9**

Abrasive Feed Direction

Valve Rotation

Engine Valve Surface

Abrasive Oscillation

Abrasive (Trizact™)

Top View

Side View

**FIG. 10**

Cut Amout
Oscillation 240rpm 0.1mm
Work 2000rpm

**FIG. 11**

**FIG. 12A**

$$y = 0.007729 \text{ x } \chi^{-0.2931}$$

**FIG. 12B**

FIG. 13A

FIG. 13B

No Abrasive Feed

Valve Rotation

Engine Valve Surface

Abrasive Oscillation

Abrasive (Trizact™)

**FIG. 14A**

**FIG. 14B**

FIG. 14C

FIG. 14D

FIG. 14E

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021105865 A1
- US 62940950
- US 62940960